# EUROPEAN PATENT APPLICATION

(11) **EP 2 348 290 A2**
(43) Date of publication of application: **27.07.2011**
(21) Application number: 10397528.0
(22) Date of filing: 28.12.2010
(51) Int. Cl.: G01D 11/24, G12B 9/08

(54) **Connecting device for measuring instruments and method for cleaning the measuring head of a measuring instrument**

(30) Priority: 11.01.2010 FI 20105016
(71) Applicant: Satron Instruments Oy, 33900 Tampere (FI)
(72) Inventor: Ruosaari, Olli, 33560 Tampere (FI)
(74) Representative: Rahkonen, Erkki Juhani

(57) **Abstract**

The invention relates to a connecting device comprising a body (6), a selector member (4) which is arranged to move in relation to the body and to rotate in relation to a rotational line (5) at least to a first and to a second position, which first and second position comprise a measuring position and a maintenance position, and at least one measuring instrument aperture (3) located in the selector member (4). Furthermore, the connecting device comprises at least one inner flushing channel (9) of the connecting device (1), which is placed at least partly in the selector member (4) of said connecting device. The invention also relates to a method for cleaning the measuring head of a measuring instrument (2) placed in the connecting device. In the method flushing medium is conveyed via the inner flushing channels (9) of the connecting device (1), in such a manner that the flushing medium is conveyed via the selector member (4) of the connecting device (1) in the measuring instrument aperture (3) of the connecting device (1).

## Description

### Field of the invention

The invention relates to connecting device for measuring instruments. The invention also relates to a method for cleaning the measuring head of a measuring instrument placed in the connecting device for measuring instruments.

### Background of the invention

In process industry various measurements are performed, in which the measuring instrument must be in direct or indirect contact with the process medium that is being measured. For this purpose for example special connecting devices for measuring instruments are used in the process industry, by means of which the measuring instrument can be positioned in the desired location in the process in connection with the process medium.

One known connecting device for measuring instruments is disclosed in US patent No. 4,628,732. In said publication the connecting device for measuring instruments comprises a special selector member, which may have for example a cylindrical or spherical shape. Said selector member has two separate operating positions: a measuring position and a maintenance position. In the connecting device disclosed in the publication, the selector member is provided with a measuring instrument aperture. When the selector member is in the measuring position, the measuring head of the measuring instrument can be connected to the process medium, wherein the measuring instrument placed in the measuring instrument aperture may measure a variable of the process. When the selector member of the connecting device is in the maintenance position, the connection between the process medium and the measuring instrument aperture positioned in the selector member is cut off. Thus, the connection between the measuring instrument placed in said measuring instrument aperture and the process is also cut off. Thus, the measuring instrument positioned in the measuring instrument aperture of the selector member of the connecting device can be for example maintained safely when the selector member is in the maintenance position.

The substance, such as process medium accumulated on the measuring heads of measuring instruments causes the need to clean the measuring instruments. When the turning connecting device is provided for example with flushing channels located in the body of the connecting device, it is possible to clean the measuring head of the measuring instrument without having to remove the measuring instrument from the connecting device. The selector member of the connecting device is then in the maintenance position, wherein the measuring head of the measuring instrument can be connected to the flushing channels in the body. The flushing medium is conveyed to the measuring head via an inlet channel for the flushing medium, from which it is removed for example via a separate outlet channel for the flushing medium. This way it is safe to flush the measuring instrument in the connecting device, but the measurements made from the process are always interrupted for the duration of cleaning the measuring head.

It is also possible to provide the connecting device with such flushing channels extending through the body of the connecting device that flush the measuring head also during measurements. Such flushing channels extending through the body and intended for flushing during measurements can be used for example to support the cleaning of the measuring head in the maintenance position. This may be reasonable, because it may make it possible to prolong the interval between the flushing actions taking place in the maintenance position. However, prior art flushing channel arrangements during the measurements do not work in an optimal way. Problems occur for example when the flushing medium is conveyed through the body of the connecting device in accordance with prior art, wherein the flushing of the measuring head of the measuring instrument is performed from outside the measuring instrument aperture located in the selector member. Thus, the flushing medium is not necessarily capable of displacing the layer of dirt, such as the layer of process medium between the supply of flushing medium and the measuring head of the measuring instrument. This problem may be emphasized if said layer of dirt has high dry matter content. If the flushing medium is not capable of displacing the layer of dirt between the supply of flushing medium and the measuring head, the cleaning process of the measuring head of the measuring instrument may be unsuccessful.

Thus, there is a need in the industry for such a solution by means of which it would be possible to arrange the possibility to flush the measuring head positioned in a connecting device so that said cleaning action would be more effective than the solution known at present.

### Brief summary of the invention

The purpose of the present invention is to present a solution to the above-described problem so that the arrangement for cleaning the measuring head of a measuring instrument placed in a connecting device for measuring instruments would be more reliable than techniques of prior art. For this purpose, a new connecting device for measuring instruments is disclosed.

To achieve this aim, the connecting device according to the invention is primarily characterized in what will be presented in claim 1. The method according to the invention is primarily characterized in what will be presented in claim 10. The dependent claims present some advantageous embodiments of the invention.

The connecting device for measuring instruments according to the invention comprises a body of the connecting device. The connecting device according to the invention also comprises a selector member of the connecting device, which is arranged to move in relation to a body and which rotates in relation to a rotational line at least to a first and to a second position, which first and second position comprise a measuring position and a maintenance position. The connecting device also comprises at least one measuring instrument aperture in the selector member. Furthermore, the connecting device comprises at least one inner flushing channel of the connecting device, which is placed at least partly in the selector member of said connecting device. According to an advantageous embodiment, there are as many inner flushing channels 9 of the connecting device 1 as there are measuring instrument apertures.

According to an advantageous embodiment, the inner flushing channel of the connecting device is at least partly positioned in connection with the shaft of the connecting device. According to an advantageous embodiment, the inner flushing channels of the connecting device comprise at least a first part, a second part and a third part of the inner flushing channel. Thus, the second part and the third part of the inner flushing channel form an angle α between them.

According to an advantageous embodiment, at least one inner flushing channel of the connecting device is provided with a lateral shift so that the second part of the inner flushing channel is positioned on a different line in relation to said third part of the inner flushing channel.

According to an advantageous embodiment, the inner flushing channel of the connecting device is positioned in such a manner that said inner flushing channel is connected to at least one measuring instrument aperture to convey flushing medium in connection with said measuring instrument aperture.

According to an advantageous embodiment, the connecting device comprises closing members for controlling the amount of flushing medium in at least one inner flushing channel of the connecting device.

### Description of the drawings

In the following, the invention will be described in more detail with reference to the appended drawings, in which
- Fig. 1: shows a connecting device according to one embodiment and its inner flushing channels in a side view,
- Fig. 2: shows a connecting device according to one embodiment and its inner flushing channels seen from the direction of the shaft,
- Fig. 3: shows a connecting device according to one embodiment and its inner flushing channels in a top view,
- Fig. 4: shows a connecting device according to one embodiment and its inner flushing channels in a slanted view from above,
- Figs. 5a-b: show two different exemplary inner flushing channels of a connecting device according to one embodiment,
- Figs. 6a-b: show a connecting device according to one embodiment and its inner flushing channels, and
- Fig. 7: shows the flushing channels in the body of a connecting device according to one embodiment.

### Detailed description of the invention

In this application for instance the terms "first part 9a of the inner flushing channel" and "second part 9b of the inner flushing channel" and "third part 9c of the inner flushing channel" are used. The term "first part 9a of the inner flushing channel" refers throughout the application to that part of the inner flushing channel of a connecting device for a measuring instruments which is the first one to be in contact with the selector member of the connecting device when flushing medium is conveyed along the inner flushing channels. The term "third part 9c of the inner flushing channel" refers throughout the application to that part of the inner flushing channel of a connecting device for measuring instruments that is positioned at least partly in the selector member and along which it is possible to convey flushing medium closer to the measuring instrument aperture of the selector member of the connecting device, preferably into the measuring instrument aperture. The term "second part 9b of the inner flushing channel" refers throughout the application to that part of the inner flushing channel of a connecting device for measuring instruments which is positioned between the first part 9a and the third part 9c of the inner flushing channel. Between said parts of the inner flushing channel there may also be other parts of the inner flushing channel. Thus, the second part of the inner flushing channel is advantageously, but not necessarily, in contact with the third part of the inner flushing channel. In some cases the first part 9a and the second part 9b of the inner flushing channel can be the one and the same shared channel part.

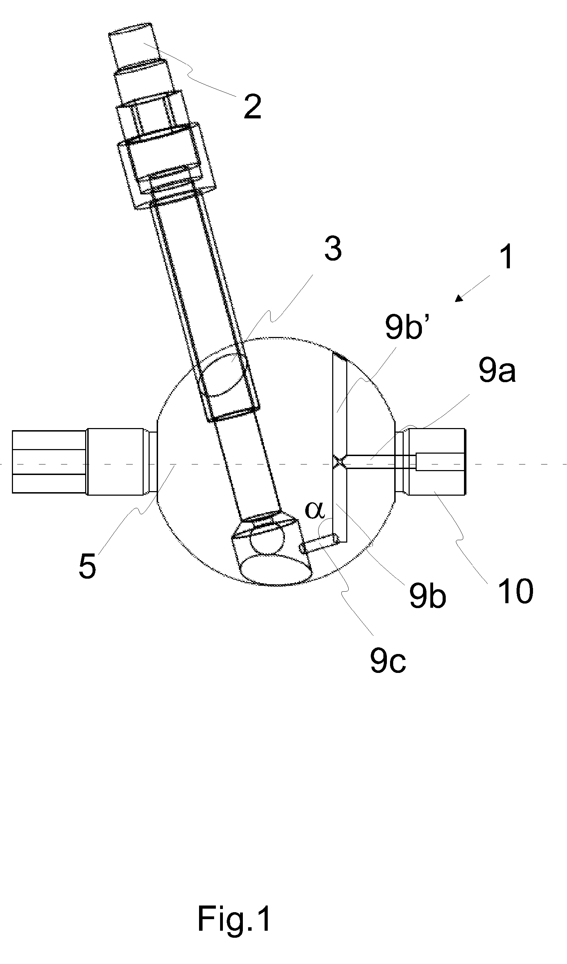

The different embodiments of the connecting device according to the invention are shown in Figs 1 to 7. In the manufacture of the connecting device it is possible to use materials that are compatible with the process to be measured. In several embodiments it is advantageous to use for example a body made of stainless steel or plastic. Sealings can be for example PTFE sealings.

Figs 1 to 7 show some exemplary solutions of the connecting device 1. The reference numerals in the Figures are used in the following way throughout the application: connecting device 1 for measuring instruments, measuring instrument aperture 3, first measuring instrument aperture 3a, second measuring instrument aperture 3b, measuring instrument 2, first measuring instrument 2a, second measuring instrument 2b, selector member 4, rotational line 5 of the selector member, body 6 of the connecting device, locking member 11, flushing channels 8 in the body of the connecting device, comprising an inlet channel 8a for the flushing medium and an outlet channel 8b for the flushing medium, and in addition to this, the inner flushing channels 9 of the connecting device are shown, comprising a first part 9a, a second part 9b and a third part 9c of the inner flushing channel.

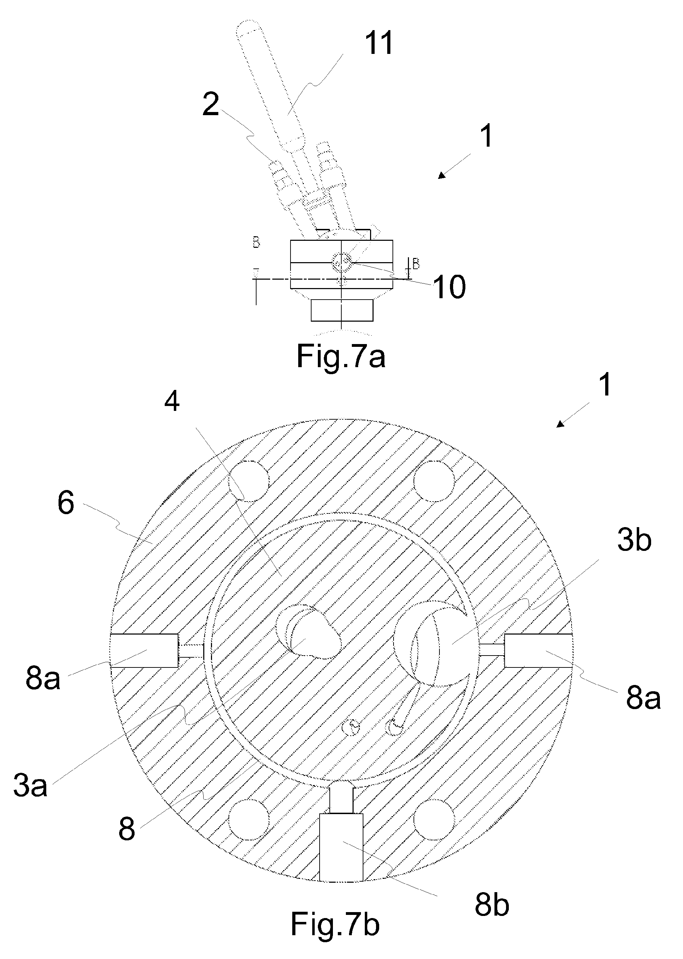

The connecting device 1 comprises a body 6 of the connecting device (shown for example in Fig. 7), which is preferably provided with a measuring aperture 7 of the body of the connecting device for measurements made from the process. The connecting device 1 also comprises at least one measuring instrument aperture 3, but there may also be a larger number of measuring instrument apertures, for example at least two, three, four or five. It is possible to place a measuring instrument 2 in the measuring instrument aperture 3. The measuring instrument 2 advantageously measures a desired variable of the process, for example pH, temperature, conductivity or pressure.

The connecting device 1 also comprises a selector member 4. The shape of the selector member 4 can be one of the following: cylindrical, hemispherical or spherical. The selector member 4 may also have another shape, in such a manner, however, that the basic idea of the invention prevails. Often the selector member 4 is preferably spherical in shape. The selector member 4 is advantageously arranged to move with respect to the body 6 in such a manner that it has at least two operating positions, in other words at least a first and a second position. The selector member 4 may also have more than two operating positions, for example three or four operating positions. Especially when there are more than two measuring instrument apertures 3, the number of which is at least one, there are often also advantageously more than two operating positions. If there are at least two measuring instrument apertures 3, the at least two operating positions of said selector member 4 may comprise at least one such positioning of the measuring instrument aperture 3 that enables measurements from the process by means of a measuring instrument 2 at the same time when at least one other positioning of the measuring instrument aperture 3 enables performing at least one maintenance task of the measuring instrument 2.

The selector member 4 rotates into all its different operating positions in relation to its rotational line 5 (shown in Fig 1 ). Typically, the selector member 4 is provided with a shaft 10 so that the axial line is located substantially on the rotational line 5 of the selector member. The selector member 4 is advantageously fastened to the body from the ends of the shaft 10 so that the rotation around the rotational line 5 is possible. The movement of the selector member 4 is advantageously restricted to the above-mentioned operating positions. By means of suitable fastenings the selector member 4 remains in the desired location with respect to the body 6 and the movement of the selector member 4 in undesired directions, such as the longitudinal direction of the shaft, is substantially prevented. In addition to this, the movement path of the selector member is affected by a housing in the body 6 in which the selector member 4 is preferably positioned.

According to an advantageous example, the connecting device 1 is equipped with closing members arranged in the connecting device 1. These closing members are intended for opening and closing at least one inner flushing channel 9 of the connecting device in such a manner that the amount of flushing medium conveyed to the connecting device 1 via the inner flushing channel 9 can be controlled. The controlling of the closing members can be conducted either automatically or manually. The closing members may comprise for example one or more valves or a similar solution positioned in at least one flushing channel 9. There may be closing members in the connecting device 1 and/or outside the connecting device 1. The connecting device 1 may comprise one or more control members which are arranged to control at least one closing member in the connecting device 1 and/or at least one closing member outside the connecting device 1. The number of closing members may depend on the number of the inner flushing channels 9. Advantageously at least one, preferably each inner flushing channel 9 comprises closing members in such a manner that each inner flushing channel 9 can be independently opened and closed.

The maintenance of the connecting device 1 is especially safe if the selector member 4 is locked for the duration of the maintenance, which can be done for example by using a special locking arm 11. Preferably, the locking can be implemented in such a manner that the operating position of the connecting device 1 cannot be changed during said locking.

In addition to the inner flushing channels 9 of the connecting device 1 it is possible to use the flushing channels 8 in the body of the connecting device 1 (shown in Fig. 7).

The connecting device 1 is fastened to the interface of the process to be measured advantageously from the outermost surface of the connecting device 1, a so-called fastening surface. This fastening of the connecting device 1 is performed by means of a method of prior art, for example by welding and/or using suitable fastening members.

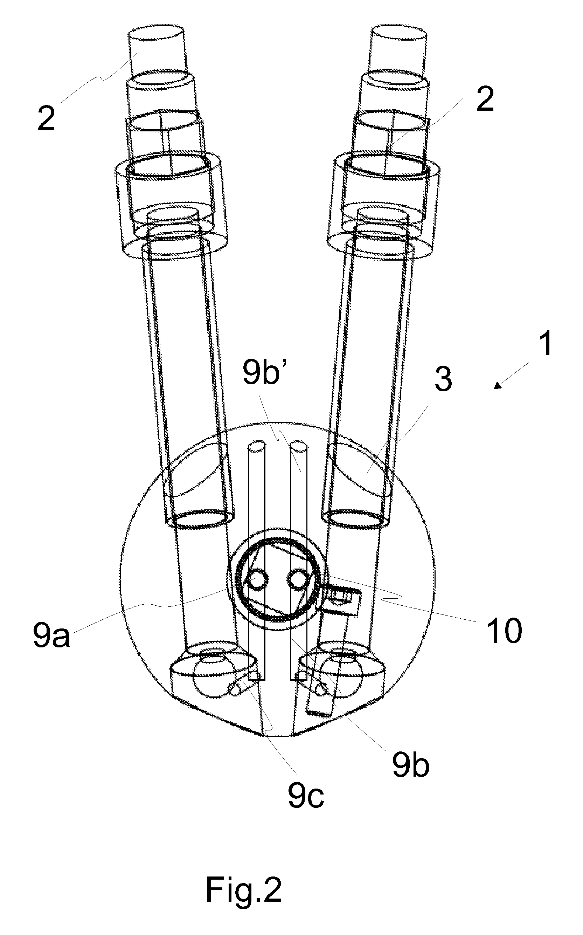

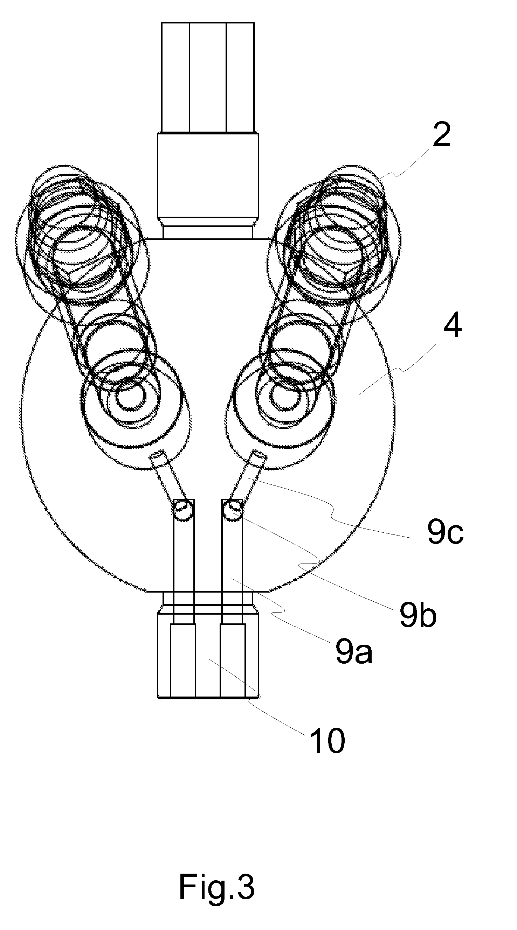

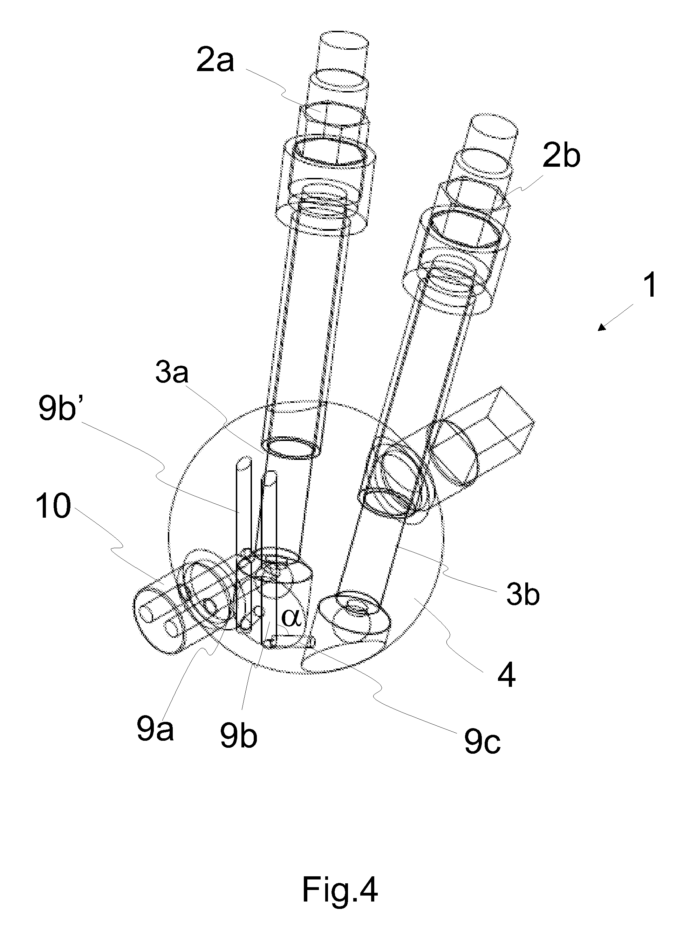

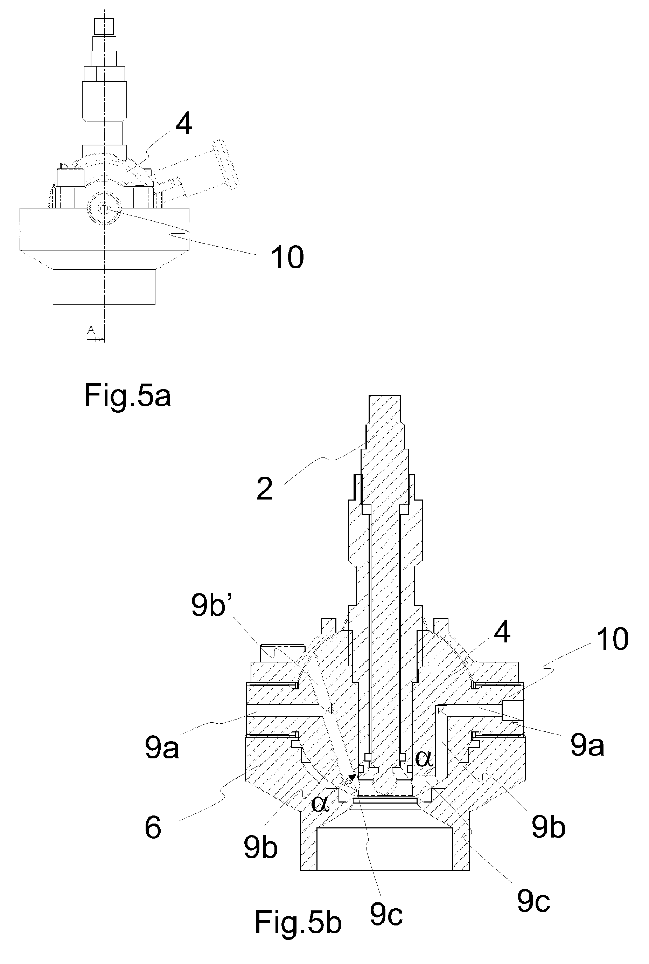

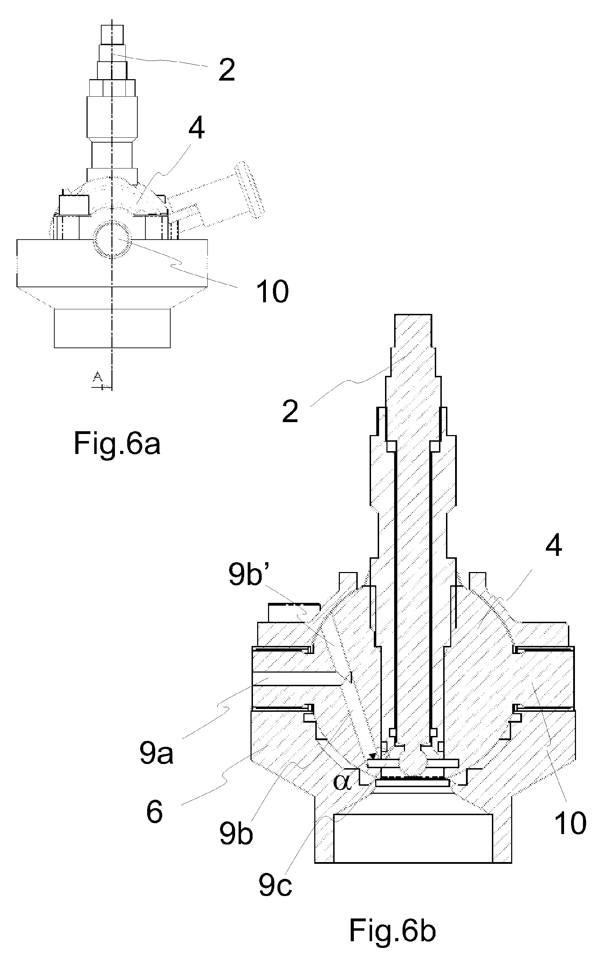

Figs 1 to 6 show some exemplary embodiments of the inner flushing channels of the connecting device according to the invention. Fig. 1 shows the connecting device from the side so that one inner flushing channel 9 can be seen. The examples of Figs 2 to 4 show two measuring instrument apertures 3 and two inner flushing channels 9. In Fig. 2 the connecting device is shown from the direction of the shaft, in Fig. 3 the connecting device is shown in a top view and in Fig. 4 the connecting device is shown diagonally from the front. Figs 5a to 5b show two different exemplary embodiments of the inner flushing channels 9 of the connecting device, in which one alternative is shown on the left-hand side in Fig. 5b and the other on the right-hand side in Fig. 5b. Figs 6a to 6b show an exemplary embodiment of the inner flushing channel 9 of the connecting device, in which the third part 9c of the inner flushing channel is a rotationally symmetrical groove. The inner flushing channel according to each embodiment may be the only inner flushing channel 9 in the connecting device 1. In one connecting device 1 there may also be several inner flushing channels 9 according to the examples, wherein each inner flushing channel 9 may be similar or different in relation to the other inner flushing channels 9.

The connecting device according Figs 1 to 7 may comprise one or several measuring instrument apertures 3 and one or several inner flushing channels 9. The inner flushing channel 9 of the connecting device advantageously comprises channel parts 9a, 9b, 9c for conveying flushing medium to that part of the connecting device 1 in which the measuring head of the measuring instrument 2 to be placed in the measuring instrument aperture 3 is intended to be positioned. The flushing of the measuring head of the measuring instrument 2 in the connecting device 1 is advantageously controlled in such a manner that the duration of the flushing process and the interval between the flushing actions are controlled variables. This may be important in that respect that in some cases the cleaning of the measuring head of the measuring instrument 2 in the connecting device 1 with the flushing medium by means of the inner flushing channels 9 during the measurements made from the process may in some cases affect the measurement results obtained by the measuring instrument 2. The flushing medium in use may in some cases for example dilute the process medium.

The inner flushing channels 9 are advantageously formed in such a manner that by means of them it is possible to flush the measuring head of the measuring instrument 2 placed in the measuring instrument aperture 3 advantageously at least when said measuring instrument aperture 3 is in the measuring position, in other words at least during the measurements made from the process. It is also possible that said flushing is performed when the measuring instrument aperture 3 is in the maintenance position. In order to flush the measuring instrument 2 preferably placed in the measuring instrument aperture 3 in the measuring position, at least one of the inner flushing channels 9 of the connecting device is positioned in such a manner in relation to the measuring instrument aperture 3 of the selector member 4 of the connecting device 1 that it is possible to flush the measuring instrument 2 placed in said measuring instrument aperture 3 at least in said measuring position. Advantageously this is implemented in such a manner that at least one inner flushing channel 9 is positioned at least partly in the selector member 4. As a result of the way in which the flushing channel 9 is implemented, it is possible to convey flushing medium from the inner flushing channel 9 placed at least partly in the selector member 4 of the connecting device 1 in at least one measuring instrument aperture 3 so that it is possible to clean the measuring head of the measuring instrument 2 located in the measuring instrument aperture 3.

According to an advantageous embodiment, the inner flushing channels of the connecting device 1 comprise at least the following parts: a first part 9a, a second part 9b and a third part 9c of the inner flushing channel. The second part 9b of the inner flushing channel is advantageously located between the first part 9a and the third part 9c. Some of the parts of the inner flushing channel 9, such as for example the second part 9b and the third part 9c, may also be formed of substantially parallel channels, wherein they are not necessarily clearly separate channels. Thus, the angle between said parts of the channel can be approximately 180 degrees. Thus, it is also possible that the inner flushing channels 9 comprise a smaller number of channel parts than the aforementioned three parts. The inner flushing channels may also comprise a larger number of channel parts than the aforementioned three parts.

The inner flushing channels 9 of the connecting device 1 are advantageously arranged to extend via the shaft 10 of the connecting device 1 to the selector member 4, as shown in the Figures. The shaft 10 of the connecting device is advantageously located substantially on the rotational line 5 of the connecting device 1. It is advantageous to arrange the inner flushing channels 9 of the connecting device so that they extend via the shaft 10 for example for such a reason that because the shaft 10 is advantageously located substantially on the rotational line 5 of the connecting device, it is then possible to control the movement of the inner flushing channels 9 when the selector member 4 moves between its different operating positions.

According to an advantageous embodiment, those parts of the inner flushing channels 9 of the connecting device 1 that are positioned at least partly inside the selector member 4 can be formed by providing the selector member 4 with openings. According to one example, the one, two, three or more channel parts 9a, 9b, 9c forming the inner flushing channel 9 are formed through the surface of the selector member 4, as shown in the Figures. These openings that form the inner flushing channels 9 of the selector member 4 can be produced for example by drilling or by another prior art method.

According to an exemplary embodiment, at least one inner flushing channel 9 of the connecting device 1 is positioned in the connecting device 1 in such a manner that the individual channel parts 9a-c of the inner flushing channel 9 that are located entirely or partly in the selector member 4 are substantially straight. Advantageously these individual parts 9a-c of the flushing channel or at least some of them are formed through the surface of the selector member 4, as disclosed above.

According to the above-mentioned advantageous example, at least some of the parts 9a-c of the inner flushing channel 9 that are positioned entirely or partly inside the selector member 4 are formed through the surface of the selector member 4. Thus, the possibly formed so-called useless ends of the inner flushing channel must be advantageously closed. For example in the situation of Fig. 1, similarly to other corresponding situations, the end part 9b' of the second part 9b of the inner flushing channel 9 must be preferably closed, so that the flushing medium would be conveyed in the desired manner along the inner flushing channels 9. This can be implemented for example so that the second end 9b' of the second part 9b of the inner flushing channel 9 directed towards the outer surface of the selector member 4 is advantageously closed for example in connection with the surface of the selector member 4. Alternatively or additionally, said closing may be implemented for example from at least one point in the area between the interface of the first part 9a and the second part 9b of the flushing channel 9 and the surface of the selector member 4 of the second part 9b, which is shown with the reference numeral 9b' in the Figures. The closing of the end part 9b' of the second part 9b of the inner flushing channel 9 can be implemented for example by welding or by using closing members, such as plugs. As a result of closing said end part 9b', the flushing medium may travel substantially in its entirety from the first part 9a of the inner flushing channel 9 via the second part 9b to the outlet of the third part 9c. In this exemplary manner the flushing medium may be advantageously conveyed to the measuring instrument aperture 3 so that it cleans the measuring head of the measuring instrument 2 to be placed in the measuring instrument aperture 3.

Another advantageous way to form the inner flushing channels is the way in which the inner flushing channel on the right-hand side in Fig. 5b is formed. In this case the second part 9b and the third part 9c of the inner flushing channel 9 can be formed through the outer surface of the selector member 4, for example substantially from the same point of the selector member 4. Thus, it is possible that the structure of the connecting device enables not having to close the channel parts made advantageously through the surface of the selector member 4 in connection with the surface of the selector member.

On the basis of the same idea (Fig. 5b, the right-hand side), it is possible to form the second part 9b and the third part 9c of the inner flushing channel alternatively also from the same side of the outer surface of the selector member 4, but substantially from different points, for example in such a manner that the second part 9b and the third part 9c of the inner flushing channel 9 intersect inside the selector member. The second end of the second part 9b of the flushing channel and/or the third part 9c of the flushing channel (i.e. the area between the intersection of the channel parts 9b and 9b and the outer surface of the selector member) can thus be closed at the desired point of each channel, for example substantially in the vicinity of the outer surface of the selector member 4. In some cases said second ends of said channel parts may be left open, if the structure of the connecting device allows it.

The third part 9c of the inner flushing channel 9 may also be advantageously implemented as a rotationally symmetrical groove in accordance with Figures 6a-b.

If there are more than one inner flushing channel 9 in the connecting device, each inner flushing channel 9 may be substantially similar or the ways in which the inner flushing channels are implemented may vary from each other.

According to an advantageous embodiment, the second part 9b and the third part 9c of the inner flushing channel 9 that are advantageously at least partly positioned in the selector member 4 form an angle α between them, in the cross-sectional view A-A of the connecting device (the cross-section shown in Figs 5a and 6a). Said angle α is advantageously at least 45 °, at least 50°, at least 55°, at least 60°, at least 65°, at least 70°, at least 75°, at least 80°, at least 85°, at least 90°, at least 95°, at least 100°, at least 105°, or at least 110°. Often the angle a is preferably 60° to 140°, 80° to 130° or 100° to 120°.

According to one embodiment, a lateral shift is arranged in the inner flushing channels 9 in addition to or instead of said angle α. In this application the concept of lateral shift means that the second part 9b of the flushing channel 9 is positioned at least slightly in a different line with respect to the third part 9c of the flushing channel 9. The lateral shift is preferably 0, 0.3, 0.5, 0.8, 1, 1.5, 2, 2.5 or 3 times the size of the diameter of the second part 9b of the inner flushing channel 9, the set of numbers containing all the intervals and subintervals inside these numerical values. Such placement of the inner flushing channels 9 may be useful in view of the rinsing result of the measuring head of the measuring instrument 2 placed in the measuring instrument aperture 3.

According to an advantageous embodiment, the inner flushing channels 9 of the connecting device 1 comprise both said angle α and said lateral shift in said intersection of the second part 9b and the third part 9c, i.e. preferably in the last corner of the inner flushing channels 9. The third part 9c of the inner flushing channel 9 is preferably positioned in such a manner that the inner flushing channel 9 ends to the measuring instrument aperture 3. According to an advantageous embodiment the inner flushing channels 9 of the connecting device comprise either said angle α or said lateral shift.

If flushing medium was conveyed through the body 5 of the connecting device 1 directly outside the connecting device, it could be especially difficult to remove the process substance or other viscous medium possibly accumulated on the measuring head 2 of the measuring instrument from outside the measuring instrument aperture 3. To solve this problem, according to an advantageous embodiment at least one inner flushing channel 9 is positioned in such a manner that the flushing medium can be conveyed via the selector member 4 to the measuring instrument aperture 3, preferably towards the measuring head of the measuring instrument 2 to be placed in the measuring instrument aperture 3. This way the measuring head of the measuring instrument 2 to be placed in the measuring instrument aperture 3 can be cleaned directly from the inside of the connecting device, for example when said measuring instrument aperture 3 is in the measuring position.

When the flushing medium is conveyed via the selector member 4 to the measuring instrument aperture 3, preferably to the measuring head of the measuring instrument 2, advantages are attained for example in that respect that it may be possible to remove the process substance which possibly may have accumulated in the measuring head of the measuring instrument 2 for example during stoppage or some other situation and which may have high dry matter content, from the measuring head of the measuring instrument 2 by means of the inner flushing channels 9 of the connecting device 1 more efficiently than in solutions of prior art, for example as a result of the flow effect and pressure effect of the flushing medium. In one exemplary case the measuring instrument 2 is placed in the measuring instrument aperture 3 advantageously in such a manner that the measuring head of the measuring instrument 2 is located at least partly in the measuring instrument aperture 3 of the selector member 4.

In the inner flushing channels of the connecting device according to the invention it is possible to use for example water or other suitable flushing medium.

The solution according to the invention is suitable for a connecting device comprising one, two or more than two measuring apertures, and at least one inner flushing channel 9. If there are more than one measuring instrument aperture 3, the connecting device 1 is advantageously also provided with more than one flushing channel 9. Thus, the inner flushing channels 9 may be substantially similar or substantially different from each other.

At least one inner flushing channel 9 of a connecting device comprising at least one measuring instrument aperture is advantageously formed in such a manner that by means of the same it is possible to flush the measuring head of the measuring instrument 2 placed in the measuring instrument aperture 3 at least when said measuring instrument aperture 3 is in the measuring position, in other words during measurements made from the process. When there are at least two measuring instrument apertures 3, it is advantageous to place inner flushing channels 9 in the connecting device 1 in such a manner that there is at least one inner flushing channel 9 per each measuring instrument aperture in the connecting device 1. Thus, there may be one or several inner flushing channels 9 of the connecting device 1 per one connecting device. Preferably, there are as many inner flushing channels 9 of the connecting device 1 as there are measuring instrument apertures 3. Thus, there is a separate inner flushing channel 9 for each measuring instrument 2 placed in the measuring instrument aperture 3 of the connecting device 1. However, it is possible that there is a larger number of flushing channels 9 or there may be a smaller number of them than there are measuring instrument apertures 3 in said connecting device 1. The inner flushing channels 9 of the connecting device 1 are advantageously placed in accordance with the principle described above also in that case that there are several inner flushing channels 9. Thus, the individual flushing channels may be similar to each other or at least some of the individual flushing channels may differ from each other.

Figures 7a to 7b show an exemplary embodiment of the flushing channels in the body 6 of the above-presented connecting device 1, which can be used for example in the connecting devices presented above in addition to the inner flushing channels 9. Fig. 7b shows the cross-sectional line B-B of Fig. 7a. The figures show a connecting device 1, a first measuring instrument aperture 3a, a second measuring instrument aperture 3b, a selector member 4, the body 6 of the connecting device and the flushing channels 8 in the body of the connecting device, including the inlet channels 8a and outlet channel 8b for the flushing medium.

According to an advantageous embodiment, the connecting device 1 is equipped with flushing channels 8 in the body of the connecting device 1. By means of the flushing channels 8 in the body it is possible to clean the measuring head of the measuring instrument 2 placed in the measuring instrument aperture 3 (in Fig. 7 the measuring instrument aperture 3b) which is in the maintenance position without having to remove the measuring instrument 2 from the connecting device 1. It is advantageous to clean the measuring head of the measuring instrument 2 when said measuring instrument is not connected to the process, because then the flushing medium dispensed to the measuring head does not typically have a harmful effect on the measurements made from the process.

The flushing channels 8 in the body 6 of the connecting device 1 are advantageously placed in the body 6 of the connecting device 1 in such a manner that it is possible to use said flushing channels 8 to clean the measuring head of each measuring instrument 2 placed in the measuring instrument aperture 3 when the measuring instrument aperture 3 in question is in the maintenance position. This is implemented for example in such a manner that the measuring head of the first measuring instrument 2a placed in the first measuring instrument aperture 3a is cleaned when the first measuring instrument aperture 3 is in the maintenance position without removing said first measuring instrument 2a from said first measuring instrument aperture 3a. Thus, at the same time the second measuring instrument 2b placed in the second measuring instrument aperture 3b which is in the measuring position can perform measurements from the process. Similarly, the measuring head of the second measuring instrument 2b placed in the second measuring instrument aperture 3b can be cleaned when said measuring instrument aperture 3b is in the maintenance position in accordance with Fig. 4, without having to remove the second measuring instrument 2b from said second measuring instrument aperture 3b. Thus, the measuring instrument 2a advantageously placed in the first measuring instrument aperture 3a can preferably perform measurements from the process at the same time.

Advantageously, the above-described steps are taken irrespective of that whether there are one, two, three or even a larger number of measuring instrument apertures 3. The measuring head of the measuring instrument 2 placed in the measuring instrument aperture 3 which is in the maintenance position can be cleaned by means of the flushing channels 8 in the body at the same time when the measuring instrument 2 connected to the process continues the measurements from the process. By using the flushing channels 8 in the body it is possible to clean the at least one measuring instrument 2 placed in the measuring instrument aperture 3 of the connecting device 1 without removing said measuring instrument 2 from the measuring instrument aperture. This task can be done without interfering with the measurements made from the process. The measuring head of the measuring instrument 3 making measurements from the process, in turn, can be cleaned by means of the inner flushing channels 9 of the connecting device (shown in Figs 1 to 6).

According to an advantageous embodiment, the selector member 4 of the connecting device 1 is for the flushing process carried out by means of the flushing channels 8 turned to a position in which the desired measuring instrument aperture 3 and the measuring instruments 2 placed therein are in the maintenance position. Thus, the measuring instrument aperture 3 of the connecting device is preferably connected to at least one inlet channel 8a of the flushing channel 8 in the body so that the measuring head of the measuring instrument 2, such as for example a sensor, is positioned substantially in connection with said flushing channel 8 of the body.

The flow of flushing medium can be controlled by means of a prior art solution, for example by means of valves placed in the connecting device 1 and/or outside the connecting device 1, which valves can be controlled for example by means of a separate control system. The flushing medium is preferably conveyed in connection with the measuring instrument 2 to be placed in the measuring instrument aperture 3 via at least one inlet channel 8a of the flushing channel 8 in the body, preferably in such a manner that the measuring head of the measuring instrument 2 placed in the measuring instrument aperture 3 can be cleaned, whereafter the flushing medium is advantageously conveyed to the outlet channel 8b of the flushing channel 8 in the body, through which the flushing medium used for washing purposes is removed from the connecting device 1.

There is advantageously at least one inlet channel 8a in the flushing channels 8 of the body, often advantageously at least two. In one exemplary case there are as many inlet channels 8a in the flushing channel of the body as there are measuring instrument apertures 3, as shown in Fig. 7, i.e. if there are for example two measuring instrument apertures 3, there are two inlet channels. Each flushing channel 8 in the body comprises its own inlet channel 8a for the flushing medium. Furthermore, the flushing channel 8 in the body may comprise an outlet channel 8b for the flushing medium. There may be for example one outlet channel 8b for the flushing medium per each inlet channel 8a for the flushing medium. The number of the outlet channels 8b for the flushing medium may also be for example half of the number of the inlet channels 8a for the flushing medium. It is also possible that there is only one outlet channel 8b for the flushing medium, irrespective of the number of the inlet channels 8a for the flushing medium.

The flushing channels 8 in the body are advantageously positioned so that the measuring head of each measuring instrument 2 extends at least in some position of the measuring instrument aperture 3, advantageously in the maintenance position of the measuring instrument aperture, so that it can be cleaned with the flushing medium, such as water from at least one inlet channel 8a of the flushing channel 8 in the body.

As mentioned above, the flushing channels 8 in the body of the connecting device clean the measuring head 2 of the measuring instrument advantageously placed in the measuring instrument aperture 3 preferably when said measuring instrument aperture is in the maintenance position. The above-described inner flushing channels 9 of the connecting device clean the measuring head 2 of the measuring instrument 2 advantageously placed in the measuring instrument aperture 3 preferably when said measuring instrument aperture is in the maintenance position.

The connecting device according to the invention can also be implemented in another way than that presented in the examples above or in the Figures. Thus, the invention is not limited solely to the examples presented in Figs. 1 to 7 and in the above description, but the invention is characterized in what will be presented in the following claims.

## Claims

1. A connecting device for measuring instruments comprising
- a body (6),
- a shaft (10),
- a selector member (4) having a spherical or hemispherical shape and which is arranged to move in relation to the body (6) and which rotates in relation to a rotational line (5) at least to a first and to a second position, which first and second position comprise a measuring position and a maintenance position, and
- at least one measuring instrument aperture (3) located in the selector member (4),
wherein in the connecting device said rotational line (5) is substantially parallel to the shaft (10) of the connecting device and said selector member (4) is fastened to the body (6) of the connecting device substantially from the ends of said shaft (10) so that the rotation around said rotational line (5) is possible,
**characterized in that**
the connecting device comprises at least one inner flushing channel (9) of the connecting device (1), which is positioned at least partly in the selector member (4) of said connecting device so that at least one inner flushing channel (9) is arranged to extend via the shaft (10) of the connecting device to the selector member and via the selector member (4) to the measuring instrument aperture (3) to clean the measuring head of the measuring instrument to be placed in the measuring instrument aperture (3).

2. The connecting device according to claim 1, **characterized in that** said inner flushing channels (9) of the connecting device (1) comprise the following parts positioned at least partly in the selector member (4):
- first part (9a) of the inner flushing channel,
- second part (9b) of the inner flushing channel, and
- third part (9c) of the inner flushing channel, and that said second part (9b) and said third part (9c) form an angle α between them, and that said angle α is between 60 to 140°, 80° to 130° or 100° to 120°

3. The connecting device according to any of the preceding claims 1 to 2, **characterized in that** at least one inner flushing channel (9) is provided with a lateral shift so that the second part (9b) of the inner flushing channel (9) is positioned on a different line in relation to said third part (9c) of said flushing channel (9).

4. The connecting device according to any of the preceding claims 1 to 3, **characterized in that** at least one inner flushing channel (9) is positioned in at least one measuring instrument aperture (3) to convey flushing medium via the selector member (4) to said measuring instrument aperture (3).

5. The connecting device according to any of the preceding claims 1 to 4, **characterized in that** said connecting device (1) comprises closing means for controlling the amount of flushing medium in at least one inner flushing channel (9) of the connecting device.

6. The connecting device according to any of the preceding claims 1 to 5, **characterized in that** the connecting device (1) comprises at least two measuring instrument apertures (3).

7. The connecting device according to any of the preceding claims 1 to 6, **characterized in that** the connecting device (1) comprises an equal number of flushing channels (9) and measuring instrument apertures (3).

8. A method for cleaning the measuring head of a measuring instrument (2) placed in a connecting device (1) for measuring instruments, said connecting device comprising:
- a body (6),
- a shaft (10),
- a selector member (4) having a spherical or hemispherical shape and which is arranged to move in relation to the body and which rotates in relation to a rotational line (5) at least to a first and to a second position, which first and second position comprise a measuring position and a maintenance position, and
- at least one measuring instrument aperture (3) located in the selector member 4,
in which connecting device said rotational line (5) is substantially parallel to the shaft (10) of the connecting device and said selector member (4) is fastened to the body (6) of the connecting device substantially from the ends of said shaft (10) so that the rotation around said rotational line (5) is possible,
**characterized in that** in the method flushing medium is conveyed via inner flushing channels (9) of the connecting device (1), in such a manner that the flushing medium is conveyed via the shaft (10) of the connecting device (1) to the selector member (4) and further via the selector member (4) in the measuring instrument aperture (3) of the connecting device to clean the measuring head of the measuring instrument to be placed in the measuring instrument aperture (3).
